# EUROPEAN PATENT SPECIFICATION

(11) **EP 3 210 101 B1**
(45) Date of publication and mention of the grant of the patent: **28.11.2018**
(21) Application number: 15788266.3
(22) Date of filing: 15.10.2015
(51) Int. Cl.: G06F 3/0482

(54) **HIT-TEST TO DETERMINE ENABLEMENT OF DIRECT MANIPULATIONS IN RESPONSE TO USER ACTIONS**
HIT-TEST ZUR ENTSCHEIDUNG DER ERMÖGLICHUNG VON DIREKTEN MANIPULATIONEN JE NACH BENUTZERAKTIONEN
TEST D'OCCURRENCE PERMETTANT DE DÉTERMINER L'ACTIVATION DE MANIPULATIONS DIRECTES EN RÉPONSE À DES ACTIONS D'UTILISATEUR

(30) Priority: 22.10.2014 US 201414521368
(43) Date of publication of application: 30.08.2017
(73) Proprietor: Microsoft Technology Licensing, LLC, Redmond, WA 98052-6399 (US)
(72) Inventor: HOFSETZ, Christian, Redmond, Washington 98052-6399 (US); EDEN, Heather, Redmond, Washington 98052-6399 (US); KAROLEWICS, Stephen, Redmond, Washington 98052-6399 (US); KRANTZ, James, Redmond, Washington 98052-6399 (US); DALTON, Michael, Redmond, Washington 98052-6399 (US); SUN, Siwen, Redmond, Washington 98052-6399 (US); YOUNG, Kerry, Redmond, Washington 98052-6399 (US)
(74) Representative: Grünecker Patent- und Rechtsanwälte PartG mbB
(86) International application number: PCT/US2015/055618
(87) International publication number: WO 2016/064642

(56) References cited:
- US-A- 6 049 325
- US-A1- 2014 013 160
- Anonymous: "2d - Is there a good way to get pixel-perfect collision detection in XNA? - Game Development Stack Exchange", , 25 July 2011 (2011-07-25), XP055234307, Retrieved from the Internet: URL:http://gamedev.stackexchange.com/quest ions/15191/is-there-a-good-way-to-get-pixe l-perfect-collision-detection-in-xna [retrieved on 2015-12-07]

## Description

### BACKGROUND

Hit-testing, also known as hit detection, picking, and/or pick correlation, is a process employed to determine whether a user-controlled cursor, such as a mouse cursor or a touch-point on a user interface associated with an application, intersects a given object, such as a shape, line, or curve, of the application displayed on the user interface. Furthermore, hit-testing is employed to respond to user actions, such as selection of a menu item or a target in the application based on its visual location on the user interface.

Currently, there are no quick, efficient techniques to determine if content in the application has been hit through either touch input, gesture input, and/or traditional input from the user. Hit-testing may be very expensive and certain types of content associated with the application, such as graphical objects, may take the longest to resolve as the time it takes to calculate hit-testing is bound by a complexity of the content.

US 2014/013160A1 discloses a hit test thread which is separate from the main thread.

WO2006084759 discloses a hit testing method including GUI components sorted into depth order. The resulting information can be used to determine the order in which hit tests are made on individual components, from front to back. The first component for which the hit test succeeds, must therefore be obscuring any other components which also lie under the given pixel, and therefore that component is the one to which the UI event should be routed.

### SUMMARY

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

Embodiments are directed to a method according to claim 1, a computing device according to claim 5 and a computer-readable memory device according to claim 10.

These and other features and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

FIG. 1 includes an example network environment where a hit-test may be performed;
FIG. 2 illustrates an example user interface associated with an application configured to perform a hit-test;
FIG. 3 illustrates an example process to perform a hit-test to determine enablement of one or more direct manipulations in response to a user action;
FIG. 4 is a block diagram of an example general purpose computing device, which may be used to perform a hit-test to determine enablement of one or more direct manipulations in response to a user action; and
FIG. 5 illustrates a logic flow diagram of a method to perform a hit-test to determine enablement of one or more direct manipulations in response to a user action, according to embodiments.

### DETAILED DESCRIPTION

As briefly described above, a hit-test may be performed to determine whether a user action detected via a user interface associated with an application intersects a given object of the application. The application may be a word-processing, spreadsheet, and/or presentation application, for example, and include one or more special content layers (SCLs). As described herein, an SCL is an application layer where an immediate decision regarding enablement of a direct manipulation of an object through the application may be made in response to the user action. An SCL processing module of the application may identify a hit in response to detecting an intersection of the user action and one or more non-transparent pixels of at least one of the SCLs during a front to back processing of the SCLs, where the pixels may correspond to the object of the application. The application may then be configured to determine whether a direct manipulation of an object through the application is enabled by the SCL. If the direct manipulation of an object through the application is enabled by the SCL, the direct manipulation may be automatically initiated. Alternately, if the direct manipulation of an object through the application is not enabled by the SCL, the direct manipulation may be disabled.

In the following detailed description, references are made to the accompanying drawings that form a part hereof, and in which are shown by way of illustrations specific embodiments or examples. These aspects may be combined, other aspects may be utilized, and structural changes may be made without departing from the scope of the present disclosure. The following detailed description is therefore not to be taken in a limiting sense, and the scope of the present invention is defined by the appended claims.

While some embodiments will be described in the general context of program modules that execute in conjunction with an application program that runs on an operating system on a personal computer, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable computing devices. Embodiments may also be practiced in distributed computing environments where tasks are performed by remote processing devices that are linked through a communications network. In a distributed computing environment, program modules may be located in both local and remote memory storage devices.

Some embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium is a computer-readable memory device. The computer-readable storage medium can for example be implemented via one or more of a volatile computer memory, a non-volatile memory, a hard drive, a flash drive, a floppy disk, or a compact disk, and comparable hardware media.

Throughout this specification, the term "platform" may be a combination of software and hardware components for hit-test performance. Examples of platforms include, but are not limited to, a hosted service executed over a plurality of servers, an application executed on a single computing device, and comparable systems. The term "server" generally refers to a computing device executing one or more software programs typically in a networked environment. However, a server may also be implemented as a virtual server (software programs) executed on one or more computing devices viewed as a server on the network. More detail on these technologies and example operations is provided below.

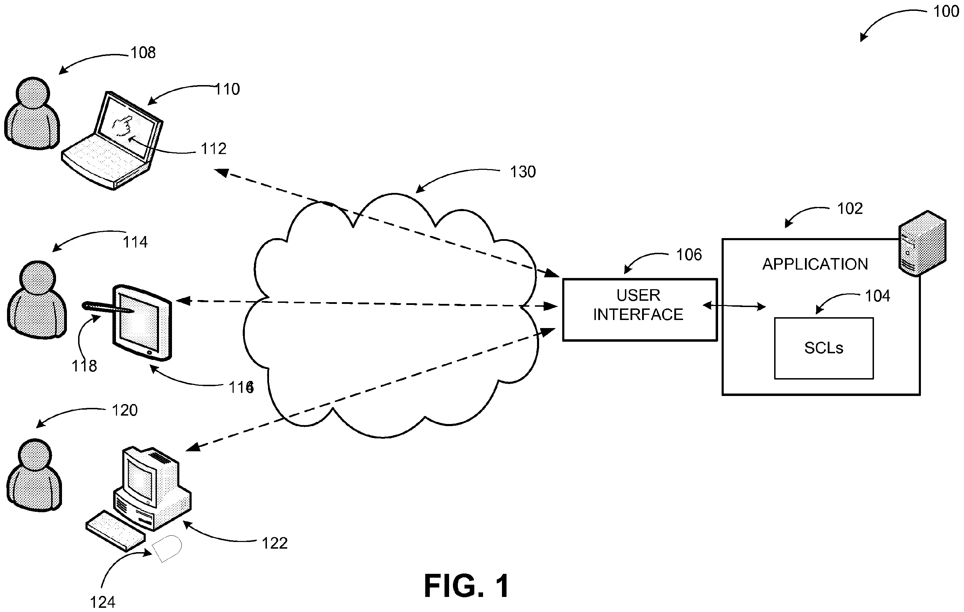

FIG. 1 includes an example network environment where a hit-test may be performed. As demonstrated in diagram 100, one or more users (108, 114, and 120) may access an application 102, such as a word-processing, spreadsheet, and/or presentation application, over a cloud-based network 130. In some examples, the application 102 may include one or more SCLs 104, where an SCL 104 is an application layer where a decision may be made immediately regarding enablement of a direct manipulation of an object through the application 102 in response to a user action intersecting one or more pixels in the SCL 104. For each SCL 104, one or more types of direct manipulation may be defined, and for each type of direct manipulation whether the direct manipulation is enabled by the SCL may further be defined. A number of the SCLs 104 that the application 102 includes may be dependent on a type of the application 102. For example, a presentation application may include a lesser number of SCLs 104 than a word-processing application.

The application 102 may be hosted at a remote server, and may be accessed through a user's client device over the cloud-based network 130. For example, the server may be configured to execute the application 102 and cause a user interface 106 associated with the application 102 to be presented through the user's client device. A local version of the application 102 may also be locally hosted at the user's client device, and data associated with the local application 102 may be retrieved over the cloud-based network 130. Some example client devices may include a desktop computer 122, a laptop computer 110, a smart phone, a car phone, a mobile phone, a tablet 116, and/or a home automation device. For example, a first user 108 may access the application 102 through the laptop computer 110 over the cloud-based network 130, and interact with the user interface 106 using a touch input 112. A second user 114 may access the application 102 through the tablet 116 over the cloud-based network 130, and interact with the user interface 106 using a stylus input 118. A third user 120 may access the application 102 through the desktop computer 122 over the cloud-based network 130, and interact with the user interface 106 using traditional input, such as a mouse 124. Other input methods may include gesture input, and/or keyboard input, for example.

An example application 102 may be configured to detect a user action through the user interface 106. The user action may include the touch input 112, the stylus input 118, the mouse 124 input, and/or other inputs such as gyroscopic input, eye-tracking, and comparable ones. For example, the touch input 112 of the first user 108, may include a tap action or a swipe action associated with an object, such as a control element, textual element, or graphical element, of the application 102 displayed on the user interface 106.

If the application 102 includes at least one SCL 104, an SCL processing module of the application 102 may be configured to perform front to back processing of the SCL 104 in response to the detected user action. The SCL processing module of the application 102 may be configured to determine whether to perform the front to back processing based on a texture content of an area on the user interface proximal to the user action. For example, if one or more objects of the application (which may include the object associated with the user action, and one or more other objects) are displayed in the area on the user interface proximal to the user action, the texture content corresponding to the objects may indicate to the SCL processing module to perform the front to back processing. Contrastingly, if no objects are displayed in the area on the user interface proximal to the user action, a lack of texture content may indicate to the SCL processing module to not perform the front to back processing, as the user action was likely not intended and a response is not needed. In response to detecting an intersection of the user action and one or more pixels of the SCL 104 during the front to back processing, a hit may be identified. The pixels may be non-transparent pixels that correspond to the object associated with the user action, where at least a portion of the object is located in the area on the user interface 106 proximal to the user action.

The application 102 may then be configured to determine whether a direct manipulation of an object through the application 102 is enabled by the SCL 104 in response to the hit. If the direct manipulation of an object through the application 102 is enabled by the SCL 104, the direct manipulation of an object through the application 102 may be automatically initiated. If the direct manipulation of an object through the application 102 is not enabled by the SCL 104, the direct manipulation of an object through the application 102 may be disabled. As previously discussed, the SCL 104 is a layer of the application 102 where a decision may be made immediately regarding enablement of a direct manipulation of an object through the application 102. For each SCL 104, one or more types of direct manipulation may be defined, and for each type of direct manipulation whether the direct manipulation is enabled or disabled by the SCL 104 may further be defined. A type of the direct manipulation may be determined based on a behavior of the object relative to the user action, and may include panning, zooming, and selecting the object, among other examples. For example, if the first user 108 performs a tap action through the touch input 112 on a picture on a document slide of a presentation application, the type of direct manipulation may include enlarging the picture by zooming.

Incorporating the immediate decision capabilities of the SCL 104 with the hit-testing performance may offer a quick, efficient way to determine enablement in response to user action that enhances current hit-testing techniques. For example, the incorporation prevents the current necessity for additional processing steps, and thus prevents the need for further processing software and/or hardware to determine the enablement of direct manipulation, which may reduce an overall operation time and cost.

The example system in FIG. 1 has been described with specific servers, client devices, applications, and interactions. Embodiments are not limited to the system according to this example configuration. A platform for hit-test performance to determine enablement of a direct manipulation may be implemented in configurations employing fewer or additional components, and performing other tasks. Furthermore, platforms for hit-test performance to determine enablement of a direct manipulation may be implemented in a similar manner using the principles described herein.

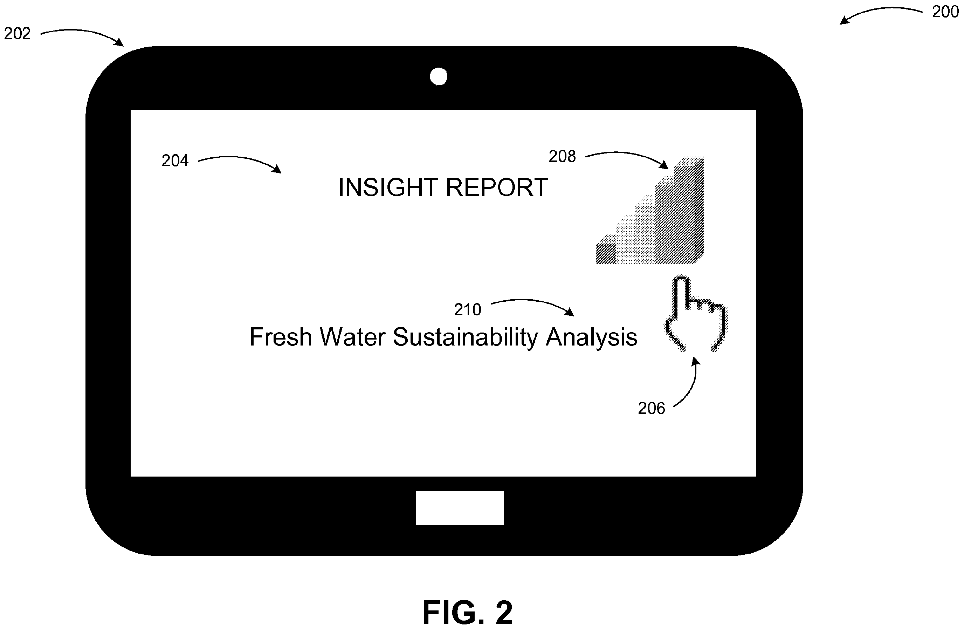

FIG. 2 illustrates an example user interface associated with an application configured to perform a hit-test. As demonstrated in diagram 200, an application, such as a presentation application, may be accessed by a user through a client device such as a tablet 202. The application may include one or more SCLs, and upon execution of the application, a user interface 204 associated with the application may be presented through the tablet 202.

The application may detect a user action through the user interface 204, where the user action may be performed through a touch input 206 and may include a tap action associated with an object of the application displayed on the user interface 204, such as a graph 208. An SCL processing module of the application may be configured to perform front to back processing of at least one SCL in response to the detection of the user action. The SCL processing module may determine whether to perform the front to back processing based on a texture content of an area on the user interface 204 proximal to the user action. For example, the texture content of the area on the user interface 204 proximal to the tap action may indicate that one or more objects of the application, such as the graph 208 or textual content 210 are proximal, and thus the front to back processing should be performed. In another example, if the user action is a swipe action performed through the touch input in an area on the user interface 204 that does not display any type of content, the texture content may indicate that no objects are proximal, and thus the front to back processing should not be performed as the user action was likely not intended and thus a response is not needed.

In response to detecting an intersection of the user action and one or more pixels of the SCL, a hit may be identified. The pixels may be non-transparent pixels that correspond to the graph 208 tapped by the user. The application may then be configured to determine whether a direct manipulation of an object through the application is enabled by the SCL in response to the hit, where the direct manipulation may include selecting the graph 208 to perform a copy and paste function, for example. If the direct manipulation of an object through the application is enabled by the SCL, the direct manipulation of an object through the application may be automatically initiated. If the direct manipulation of an object through the application is not enabled by the SCL, the direct manipulation of an object through the application may be disabled.

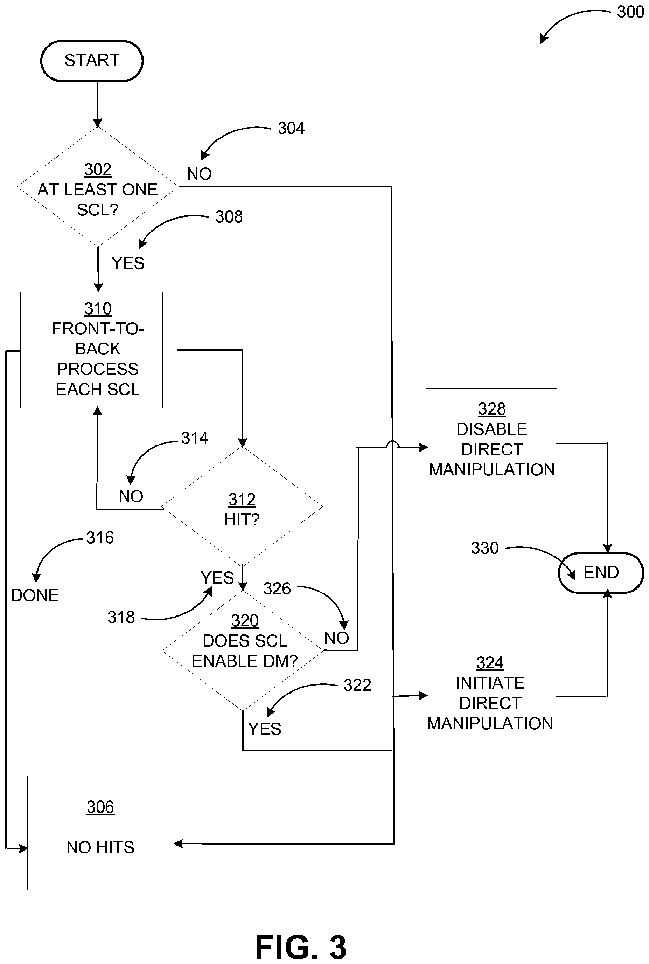

FIG. 3 illustrates an example process to perform a hit-test to determine enablement of one or more direct manipulations in response to a user action. An application, such as a word-processing, spreadsheet, and/or presentation application, may be accessed by a user through a client device, and upon execution of the application, a user interface associated with the application may be presented through a display of the client device to enable user interaction with the application. In some examples, the application may include one or more SCLs, where a number of the SCLs depends on a type of the application. Each SCL is an application layer where a decision may be made immediately regarding enablement of a direct manipulation of an object through the application in response to a user action.

As demonstrated in a diagram 300, in response to detecting a user action through the user interface associated with the application, an SCL processing module of an application may determine if the application includes at least one SCL 302. If the application does not include at least one SCL 304, no hits may be identified 306. If the application does include at least one SCL 308, an SCL processing module of the application may be configured to perform front to back processing of each SCL 310 in response to the detection of the user action. The SCL processing module may determine whether to perform the front to back processing based on a texture content of an area on the user interface proximal to the user action. The SCL processing module may identify if there are any hits 312 by determining if there is an intersection of the user action and one or more pixels of at least one SCL detected during the front to back processing. If there are no hits identified 314, the SCL processing module may continue processing other SCLs (i.e., if the application includes more than one SCL) and may complete processing 316 the SCLs once each SCL is processed and no hits are identified 306.

If there are hits identified 318, the application may determine whether the SCL enables direct manipulation of an object through the application 320. For example, one or more types of direct manipulation may be defined for each SCL, and for each type of direct manipulation whether the direct manipulation is enabled or disabled by the SCL may be further defined. If the SCL enables direct manipulation of an object through the application 322, the direct manipulation may be automatically initiated 324 and the process may end 330. If the SCL does not enable direct manipulation of an object through the application 326, the direct manipulation may be disabled 328 and the process may end 330.

The examples in FIGs. 1 through 3 have been described using specific network environments, configurations, devices, and processes to perform a hit-test to determine enablement of one or more direct manipulations. Embodiments to perform a hit-test are not limited to the specific network environments, configurations, devices, and processes according to these examples.

The capability of the one or more SCLs of the application to make an immediate decision regarding enablement or disablement of a direct manipulation of an object in response to a user action may advantageously reduce a load of the processor while simultaneously improving usability in regards to quicker response to user actions.

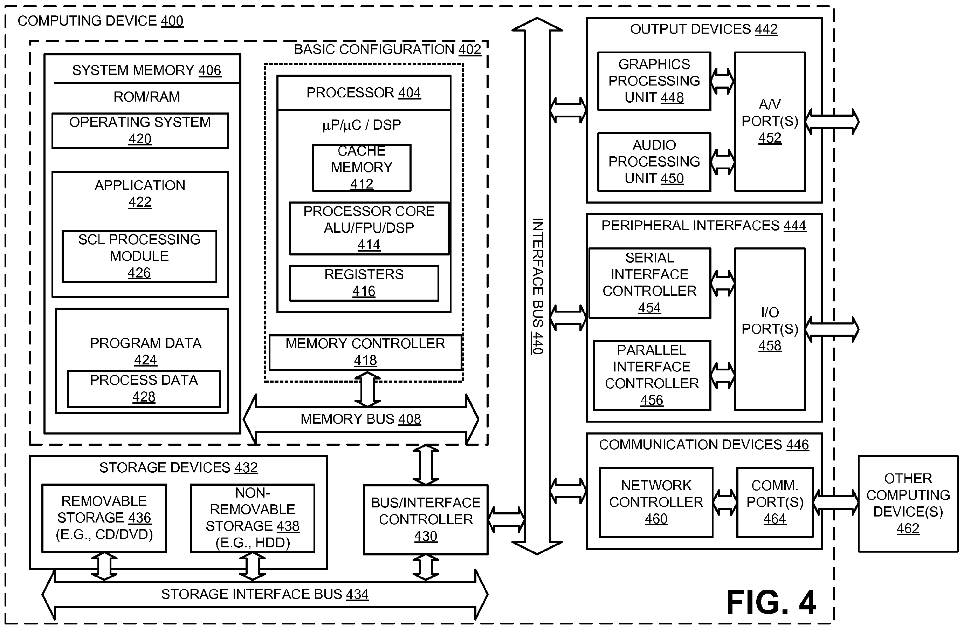

FIG. 4 and the associated discussion are intended to provide a brief, general description of a general purpose computing device, which may be used to perform a hit-test to determine enablement of one or more direct manipulations in response to a user action.

For example, computing device 400 may be used as a server, desktop computer, portable computer, smart phone, special purpose computer, or similar device. In an example basic configuration 402, the computing device 400 may include one or more processors 404 and a system memory 406. A memory bus 408 may be used for communicating between the processor 404 and the system memory 406. The basic configuration 402 is illustrated in FIG. 4 by those components within the inner dashed line.

Depending on the desired configuration, the processor 404 may be of any type, including but not limited to a microprocessor (µP), a microcontroller (µC), a digital signal processor (DSP), or any combination thereof. The processor 404 may include one more levels of caching, such as a level cache memory 412, one or more processor cores 414, and registers 416. The example processor cores 414 may (each) include an arithmetic logic unit (ALU), a floating point unit (FPU), a digital signal processing core (DSP Core), or any combination thereof. An example memory controller 418 may also be used with the processor 404, or in some implementations the memory controller 418 may be an internal part of the processor 404.

Depending on the desired configuration, the system memory 406 may be of any type including but not limited to volatile memory (such as RAM), non-volatile memory (such as ROM, flash memory, etc.) or any combination thereof. The system memory 406 may include an operating system 420, an application 422, and program data 424. The application 422 may include one or more SCLs and an SCL processing module 426, which may be an integral part of the application or a separate application on its own. Execution of the application 422 may cause an associated user interface to be presented. In response to detecting a user action through the user interface it may be determined if the application includes at least one SCL. The SCL processing module 426 may perform front to back processing of the at least one SCL of the application to detect an intersection of the user action and the one or more pixels of at least one SCL, which may identify a hit. Whether a direct manipulation of an object through the application is enabled by the at least one SCL may be determined in response to the hit, and if the direct manipulation of an object through the application is enabled by the at least one SCL, the direct manipulation of an object through the application may be automatically initiated. Alternately, if the direct manipulation of an object through the application is not enabled by the at least one SCL, the direct manipulation of an object through the application may be disabled. The program data 424 may include, among other data, process data 428 related to the enablement of the direct manipulation based on SCL and direct manipulation type definitions, as described herein.

The computing device 400 may have additional features or functionality, and additional interfaces to facilitate communications between the basic configuration 402 and any desired devices and interfaces. For example, a bus/interface controller 430 may be used to facilitate communications between the basic configuration 402 and one or more data storage devices 432 via a storage interface bus 434. The data storage devices 432 may be one or more removable storage devices 436, one or more non-removable storage devices 438, or a combination thereof. Examples of the removable storage and the non-removable storage devices include magnetic disk devices such as flexible disk drives and hard-disk drives (HDDs), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

The system memory 406, the removable storage devices 436 and the non-removable storage devices 438 are examples of computer storage media. Computer storage media includes, but is not limited to, RAM, ROM, EEPROM, flash memory or other memory technology, CD-ROM, digital versatile disks (DVDs), solid state drives, or other optical storage, magnetic cassettes, magnetic tape, magnetic disk storage or other magnetic storage devices, or any other medium which may be used to store the desired information and which may be accessed by the computing device 400. Any such computer storage media may be part of the computing device 400.

The computing device 400 may also include an interface bus 440 for facilitating communication from various interface devices (for example, one or more output devices 442, one or more peripheral interfaces 444, and one or more communication devices 446) to the basic configuration 402 via the bus/interface controller 430. Some of the example output devices 442 include a graphics processing unit 448 and an audio processing unit 450, which may be configured to communicate to various external devices such as a display or speakers via one or more A/V ports 452. One or more example peripheral interfaces 444 may include a serial interface controller 454 or a parallel interface controller 456, which may be configured to communicate with external devices such as input devices (for example, keyboard, mouse, pen, voice input device, touch input device, etc.) or other peripheral devices (for example, printer, scanner, etc.) via one or more I/O ports 458. An example communication device 446 includes a network controller 460, which may be arranged to facilitate communications with one or more other computing devices 462 over a network communication link via one or more communication ports 464. The one or more other computing devices 462 may include servers, client devices, and comparable devices.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

The computing device 400 may be implemented as a part of a general purpose or specialized server, mainframe, or similar computer that includes any of the above functions. The computing device 400 may also be implemented as a personal computer including both laptop computer and non-laptop computer configurations.

Example embodiments may also include methods to perform a hit-test to determine enablement of one or more direct manipulations. These methods can be implemented in any number of ways, including the structures described herein. One such way may be by machine operations, of devices of the type described in the present disclosure. Another optional way may be for one or more of the individual operations of the methods to be performed in conjunction with one or more human operators performing some of the operations while other operations may be performed by machines. These human operators need not be collocated with each other, but each can be only with a machine that performs a portion of the program. In other embodiments, the human interaction can be automated such as by pre-selected criteria that may be machine automated.

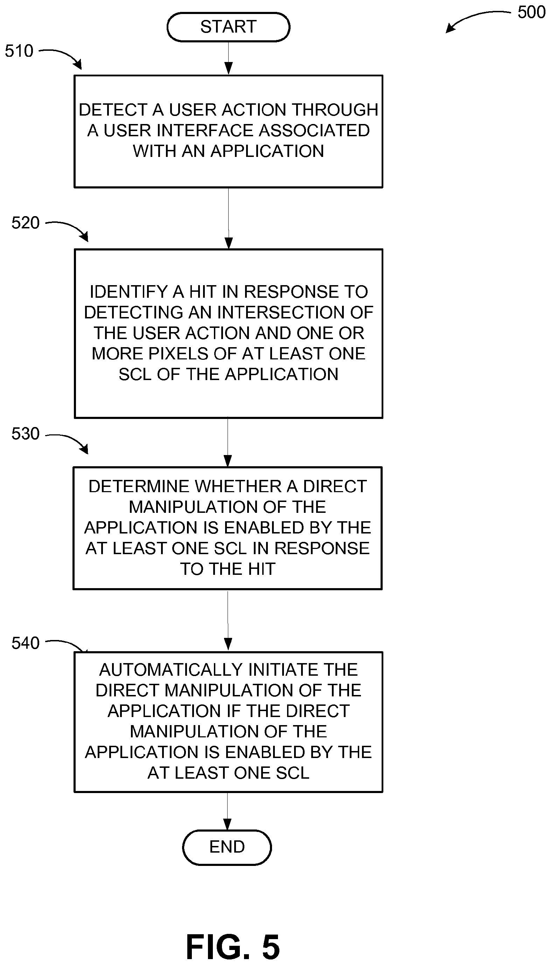

FIG. 5 illustrates a logic flow diagram for process 500 of a method to perform a hit-test to determine enablement of one or more direct manipulations in response to a user action, according to embodiments. Process 500 may be implemented on a server or other system.

Process 500 begins with operation 510, where an application may be configured to detect a user action through a user interface associated with the application. The user action may include a touch input including a tap and swipe action, a gesture input, a pen input, a mouse input, and/or keyboard input, for example. If the application includes at least one SCL, an SCL processing module of the application may be configured to perform front to back processing of each SCL.

At operation 520, a hit may be identified in response to detecting an intersection of the user action and one or more pixels of the SCL during the front to back processing. The pixels may be non-transparent pixels that correspond to an object associated with the user action, such as a control element, a textual element, and/or a graphical element, of the application displayed on the user interface. At least a portion, if not all, of the object may be located in an area on the user interface proximal to the user action.

At operation 530, the application may then be configured to determine whether a direct manipulation of an object through the application is enabled by the SCL in response to the hit. The SCL is an application layer where a decision may be made immediately regarding enablement of a direct manipulation of an object through the application. For each SCL, one or more types of direct manipulation may be defined, and for each type of direct manipulation whether the direct manipulation is enabled or disabled by the SCL may further be defined. A type of the direct manipulation may be determined based on a behavior of the object relative to the user action, and may include panning, zooming, and selecting the object, among other examples.

At operation 540, the direct manipulation of an object through the application may be automatically initiated if the direct manipulation of an object through the application is enabled by the SCL. Alternately, if the direct manipulation of an object through the application is not enabled by the SCL, the direct manipulation of an object through the application may be disabled.

The operations included in process 500 are for illustration purposes. Performance of a hit-test to determine enablement of direct manipulations in response to a user action may be implemented by similar processes with fewer or additional steps, as well as in different order of operations using the principles described herein.

According to some embodiments, a method to perform hit-testing is provided. The method may include a means for detecting a user action through a user interface associated with an application, a means for identifying a hit in response to detecting an intersection of the user action and one or more pixels of at least one SCL of the application, a means for determining whether a direct manipulation of an object through the application is enabled by the at least one SCL in response to the hit, and a means for automatically initiating the direct manipulation of an object through the application if the direct manipulation of the object through the application is enabled by the at least one SCL.

According to some examples, methods to perform hit-testing are provided. An example method may include detecting a user action through a user interface associated with an application, and identifying a hit in response to detecting an intersection of the user action and one or more pixels of at least one SCL of the application. The example method may also include determining whether a direct manipulation of an object through the application is enabled by the at least one SCL in response to the hit, and automatically initiating the direct manipulation of an object through the application if the direct manipulation of the object through the application is enabled by the at least one SCL.

In other examples, the direct manipulation may be disabled if the direct manipulation of the object through the application is not enabled by the at least one SCL. In response to detecting the user action through the user interface associated with the application, it may be determined if the application includes the at least one SCL. Front to back processing of the at least one SCL of the application may be performed at a SCL processing module of the application to detect the intersection of the user action and the one or more pixels of at least one SCL. It may be determined whether to perform the front to back processing based on a texture content of an area on the user interface proximal to the user action.

In further examples, for each SCL one or more types of direct manipulation may be defined. For each type of direct manipulation, whether the direct manipulation is enabled or disabled by the SCL in response to the hit may be defined. The user action may include a touch input, a gesture input, a mouse input, a pen input, an eye-tracking input, a voice command input, a gyroscopic input, and/or a keyboard input.

According to other examples, computing devices to perform hit-tests may be described. An example computing device may include a memory configured to store instructions, and a processor coupled to the memory, the processor executing an application comprising one or more SCLs and causing a user interface associated with the application to be presented. The application may be configured to detect a user action through the user interface associated with the application, and identify a hit in response to detecting an intersection of the user action and one or more pixels of at least one of the SCLs. The application may also be configured to determine whether a direct manipulation of an object through the application is enabled by the at least one SCL in response to the hit, and automatically initiate the direct manipulation of the object through the application if the at least one SCL enables the direct manipulation of the object through the application.

In other embodiments, the one or more pixels of the at least one SCL may be non-transparent. The one or more pixels of the at least one SCL may correspond to the object displayed on the user interface associated with the application. At least a portion of the object may be located in an area on the user interface proximal to the user action. A type of the direct manipulation may be determined based on a behavior of the object relative to the user action, where the type of the direct manipulation includes panning, zooming, and/or selecting.

In further embodiments, a number of the SCLs may be dependent on a type of the application, wherein the application is one or more of a word-processing application, a spreadsheet application, and a presentation application. The user interface associated with the application may be presented to a user through a display of a client device upon execution of the application at the client device.

According to some examples, computer-readable memory devices with instructions stored thereon to perform a hit-test may be described. Example instructions may include detecting a user action through a user interface of an application, and identifying a hit in response to detecting an intersection of the user action and one or more pixels of at least one SCL. The example instructions may also include determining whether a direct manipulation of an object through the application is enabled by the at least one SCL in response to the hit, and automatically initiating the direct manipulation of the object through the application if the direct manipulation of the object through the application is enabled by the at least one SCL, or disabling the direct manipulation if the direct manipulation of the object through the application is not enabled by the at least one SCL.

In other examples, for each SCL one or more types of direct manipulation may be defined. For each type of direct manipulation, if the direct manipulation is enabled or disabled by the SCL in response to the hit may be defined.

The above specification, examples and data provide a complete description of the manufacture and use of the composition of the embodiments. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments.

## Claims

1. A method to perform hit-testing, the method comprising:
detecting a user action through a user interface associated with an application (102) comprising a plurality of special content layers, SCLs (104), wherein a SCL is an application layer where an immediate decision regarding enablement of a direct manipulation of an object displayed on the user interface associated with the application may be made in response to the user action;
in response to detecting an intersection of the user action and one or more pixels of at least one special content layer of the application, identifying a hit, wherein the one or more pixels of the at least one SCL correspond to the object displayed on the user interface associated with the application, said detecting comprising performing front to back processing of the special content layers of the application at a SCL processing module of the application based on a texture content of an area on the user interface proximal to the user action, wherein a lack of texture indicates not to perform the front to back processing and the presence of texture content indicates to perform the front to back processing;
determining whether a direct manipulation of the object through the application is enabled by the at least one SCL in response to the hit; and
automatically initiating the direct manipulation of the object through the application if the direct manipulation of the object through the application is enabled by the at least one SCL.

2. The method of claim 1, further comprising:
disabling the direct manipulation if the direct manipulation of the object through the application is not enabled by the at least one SCL.

3. The method of claim 1, further comprising:
in response to detecting the user action through the user interface associated with the application, determining if the application includes the at least one SCL.

4. The method of claim 1, wherein the user action includes one or more of: a touch input, a gesture input, a mouse input, a pen input, an eye-tracking input, a voice command input, a gyroscopic input, and/or a keyboard input.

5. A computing device (400) to perform a hit-test, the computing device comprising:
a memory (406) configured to store instructions; and
a processor (404) coupled to the memory, the processor executing an application (102) comprising a plurality of special content layers, SCLs (104), wherein a SCL is an application layer where an immediate decision regarding enablement of a direct manipulation of an object displayed on a user interface associated with the application may be made in response to a user action, the application causing the user interface associated with the application to be presented, wherein the application is configured to:
detect the user action through the user interface associated with the application;
in response to detecting an intersection of the user action and one or more pixels of at least one of the SCLs, identify a hit, wherein the one or more pixels of the at least one SCL correspond to the object displayed on the user interface associated with the application, said detecting comprising performing front to back processing of the special content layers of the application at a SCL processing module of the application based on a texture content of an area on the user interface proximal to the user action, wherein a lack of texture indicates not to perform the front to back processing and the presence of texture content indicates to perform the front to back processing;
determine whether a direct manipulation of the object through the application is enabled by the at least one SCL in response to the hit; and
automatically initiate the direct manipulation of the object through the application if the at least one SCL enables the direct manipulation of the object through the application.

6. The computing device of claim 5, wherein at least a portion of the object is located in an area on the user interface proximal to the user action.

7. The computing device of claim 5, wherein a type of the direct manipulation is determined based on a behavior of the object relative to the user action, and includes one of panning, zooming, and selecting.

8. The computing device of claim 5, wherein a number of the SCLs is dependent on a type of the application.

9. The computing device of claim 5, wherein the computing device is a client device and wherein the user interface associated with the application is presented to a user through a display of the client device upon execution of the application at the client device.

10. A computer-readable memory device with instructions stored thereon to perform a hit-test, the instructions comprising:
detecting a user action through a user interface of an application (102) comprising a plurality of special content layers, SCLs (104), wherein a SCL is an application layer where an immediate decision regarding enablement of a direct manipulation of an object displayed on the user interface associated with the application may be made in response to the user action;
in response to detecting an intersection of the user action and one or more pixels of at least one special content layer, identifying a hit, wherein the one or more pixels of the at least one SCL correspond to the object displayed on the user interface associated with the application, said detecting comprising performing front to back processing of the special content layers of the application at a SCL processing module of the application based on a texture content of an area on the user interface proximal to the user action, wherein a lack of texture indicates not to perform the front to back processing and the presence of texture content indicates to perform the front to back processing;
determining whether a direct manipulation of the object through the application is enabled by the at least one SCL in response to the hit; and
automatically initiating the direct manipulation of the object through the application if the direct manipulation of the object through the application is enabled by the at least one SCL, or
disabling the direct manipulation if the direct manipulation of the object through the application is not enabled by the at least one SCL.

11. The computer-readable memory device of claim 10, wherein the instructions further comprise:
defining, for each SCL, one or more types of direct manipulation.

12. The computer-readable memory device of claim 11, wherein the instructions further comprise:
defining, for each type of direct manipulation, if the direct manipulation is enabled or disabled by the SCL in response to the hit.

## Patentansprüche

1. Verfahren zum Durchführen von Treffertests, wobei das Verfahren umfasst:
Ermitteln einer Benutzeraktion durch eine Benutzerschnittstelle, die einer Anwendung (102) zugehörig ist, umfassend eine Vielzahl von speziellen Inhaltsschichten (Special Content Layers, SCLs) (104), wobei eine SCL eine Anwendungsschicht ist, auf der eine unmittelbare Entscheidung hinsichtlich der Aktivierung einer direkten Manipulation eines Objekts, das auf der Benutzeroberfläche angezeigt wird, die der Anwendung zugeordnet ist, in Reaktion auf die Benutzeraktion vorgenommen werden kann;
in Reaktion auf das Ermitteln einer Überschneidung der Benutzeraktion und von einem oder mehreren Pixeln der mindestens einen speziellen Inhaltsschicht der Anwendung, Identifizieren eines Treffers, wobei die einen oder mehreren Pixel der mindestens einen SCL dem auf der Benutzeroberfläche, die der Anwendung zugeordnet ist, angezeigten Objekt entsprechen,
wobei das Ermitteln das Durchführen einer Verarbeitung von vorne nach hinten der speziellen Inhaltsschichten der Anwendung auf einem SCL-Verarbeitungsmodul der Anwendung basierend auf einem Texturinhalt einer Fläche auf der Benutzeroberfläche nahe der Benutzeraktion umfasst, wobei ein Fehlen der Textur anzeigt, dass die Verarbeitung von vorne nach hinten nicht durchgeführt werden soll, und die Anwesenheit des Texturinhalts anzeigt, dass die Verarbeitung von vorne nach hinten durchgeführt werden soll;
Bestimmen, ob eine direkte Manipulation des Objekts durch die Anwendung durch die mindestens eine SCL aktiviert ist, in Reaktion auf den Test; und
automatisches Initiieren der direkten Manipulation des Objekts durch die Anwendung, wenn die direkte Manipulation des Objekts durch die Anwendung durch die mindestens eine SCL aktiviert ist.

2. Verfahren nach Anspruch 1, des Weiteren umfassend:
Deaktivieren der direkten Manipulation, wenn die direkte Manipulation des Objekts durch die Anwendung nicht durch die mindestens eine SCL aktiviert ist.

3. Verfahren nach Anspruch 1, des Weiteren umfassend:
in Reaktion auf das Ermitteln der Benutzeraktion durch die Benutzerschnittstelle, die der Anwendung zugeordnet ist, Bestimmen, ob die Anwendung die mindestens eine SCL beinhaltet.

4. Verfahren nach Anspruch 1, wobei die Benutzeraktion eines oder mehrere aus Folgendem beinhaltet: eine Berührungseingabe, eine Gesteneingabe, eine Mauseingabe, eine Stifteingabe, eine Eingabe durch Augenverfolgung, eine Eingabe durch Sprachbefehl, eine gyroskopische Eingabe und/oder eine Tastatureingabe.

5. Computervorrichtung (400) zur Durchführung eines Treffertests, wobei die Computervorrichtung umfasst:
einen Speicher (406), der zum Speichern von Befehlen konfiguriert ist; und
einen Prozessor (404), der mit dem Speicher verbunden ist, wobei der Prozessor eine Anwendung (102) umfassend eine Vielzahl von speziellen Inhaltsschichten (Special Content Layers, SCLs) (104) ausführt, wobei eine SCL eine Anwendungsschicht ist, auf der eine unmittelbare Entscheidung hinsichtlich der Aktivierung einer direkten Manipulation eines Objekts, das auf einer Benutzeroberfläche angezeigt wird, die der Anwendung zugeordnet ist, in Reaktion auf die Benutzeraktion vorgenommen werden kann, wobei die Anwendung die der Anwendung zugeordnete Benutzerschnittstelle dazu veranlasst, dargestellt zu werden, wobei die Anwendung zu Folgendem konfiguriert ist:
Ermitteln der Benutzeraktion durch die Benutzerschnittstelle, die der Anwendung zugeordnet ist;
in Reaktion auf das Ermitteln einer Überschneidung der Benutzeraktion und von einem oder mehreren Pixeln von mindestens einer der SCLs, Identifizieren eines Treffers, wobei die einen oder mehrere Pixel der mindestens einen SCL dem auf der Benutzeroberfläche, die der Anwendung zugeordnet ist, angezeigten Objekt entsprechen, wobei das Ermitteln das Durchführen einer Verarbeitung von vorne nach hinten der speziellen Inhaltsschichten der Anwendung auf einem SCL-Verarbeitungsmodul der Anwendung basierend auf einem Texturinhalt einer Fläche auf der Benutzeroberfläche nahe der Benutzeraktion umfasst, wobei ein Fehlen der Textur anzeigt, dass die Verarbeitung von vorne nach hinten nicht durchgeführt werden soll, und die Anwesenheit des Texturinhalts anzeigt, dass die Verarbeitung von vorne nach hinten durchgeführt werden soll;
Bestimmen, ob eine direkte Manipulation des Objekts durch die Anwendung durch die mindestens eine SCL aktiviert ist, in Reaktion auf den Test; und
automatisches Initiieren der direkten Manipulation des Objekts durch die Anwendung, wenn die mindestens eine SCL die direkte Manipulation des Objekts durch die Anwendung aktiviert.

6. Computervorrichtung nach Anspruch 5,
wobei sich mindestens ein Teil des Objekts in einem Bereich der Benutzerschnittstelle nahe der Benutzeraktion befindet.

7. Computervorrichtung nach Anspruch 5,
wobei ein Typ der direkten Manipulation basierend auf einem Verhalten des Objekts relativ zu der Benutzeraktion bestimmt wird und eines aus Verschieben, Vergrößern und Auswählen beinhaltet.

8. Computervorrichtung nach Anspruch 5, wobei eine Anzahl der SCLs von einem Typ der Anwendung abhängig ist.

9. Computervorrichtung nach Anspruch 5, wobei die Computervorrichtung eine Client-Vorrichtung ist und wobei die Benutzerschnittstelle, die der Anwendung zugeordnet ist, einem Benutzer durch eine Anzeige auf der Client-Vorrichtung bei Ausführung der Anwendung auf der Client-Vorrichtung präsentiert wird.

10. Computerlesbare Speichervorrichtung mit Befehlen, die darauf gespeichert sind, um einen Treffertest durchzuführen, wobei die Befehle umfassen:
Ermitteln einer Benutzeraktion durch eine Benutzerschnittstelle einer Anwendung (102), umfassend eine Vielzahl von speziellen Inhaltsschichten (Special Content Layers, SCLs) (104), wobei eine SCL eine Anwendungsschicht ist, auf der eine unmittelbare Entscheidung hinsichtlich der Aktivierung einer direkten Manipulation eines Objekts, das auf der Benutzeroberfläche angezeigt wird, die der Anwendung zugeordnet ist, in Reaktion auf die Benutzeraktion vorgenommen werden kann;
in Reaktion auf das Ermitteln einer Überschneidung der Benutzeraktion und von einem oder mehreren Pixeln von mindestens einer besonderen Inhaltsschicht, Identifizieren eines Treffers, wobei die einen oder mehrere Pixel der mindestens einen SCL dem auf der Benutzeroberfläche, die der Anwendung zugeordnet ist, angezeigten Objekt entsprechen, wobei das Ermitteln das Durchführen einer Verarbeitung von vorne nach hinten der speziellen Inhaltsschichten der Anwendung auf einem SCL-Verarbeitungsmodul der Anwendung basierend auf einem Texturinhalt einer Fläche auf der Benutzeroberfläche nahe der Benutzeraktion umfasst, wobei ein Fehlen der Textur anzeigt, dass die Verarbeitung von vorne nach hinten nicht durchgeführt werden soll, und die Anwesenheit des Texturinhalts anzeigt, dass die Verarbeitung von vorne nach hinten durchgeführt werden soll;
Bestimmen, ob eine direkte Manipulation des Objekts durch die Anwendung durch die mindestens eine SCL aktiviert ist, in Reaktion auf den Test; und
automatisches Initiieren der direkten Manipulation des Objekts durch die Anwendung, wenn die direkte Manipulation des Objekts durch die Anwendung durch die mindestens eine SCL aktiviert ist, oder
Deaktivieren der direkten Manipulation, wenn die direkte Manipulation des Objekts durch die Anwendung nicht durch die mindestens eine SCL aktiviert ist.

11. Computerlesbare Speichervorrichtung nach Anspruch 10, wobei die Befehle des Weiteren umfassen:
Definieren, für jede SCL, von einem oder mehreren Typen der direkten Manipulation.

12. Computerlesbare Speichervorrichtung nach Anspruch 11,
wobei die Befehle des Weiteren umfassen:
Definieren, für jeden Typ der direkten Manipulation, ob die direkte Manipulation aktiviert oder deaktiviert ist, durch die SCL in Reaktion auf den Treffer.

## Revendications

1. Procédé pour effectuer un test d'occurrence, le procédé comprenant les étapes suivantes:
détecter une action d'utilisateur à travers une interface utilisateur associée à une application (102) comprenant une pluralité de couches de contenu spéciales, SLC (104), dans lequel une couche SCL étant une couche d'application où une décision immédiate concernant l'activation d'une manipulation directe d'un objet affiché sur l'interface utilisateur associée à l'application peut être adoptée en réponse à l'action de l'utilisateur;
en réponse à la détection d'une intersection de l'action de l'utilisateur et d'un ou plusieurs pixels d'au moins une couche de contenu spéciale de l'application, identifiant une occurrence, dans lequel ou plusieurs pixels dudit au moins une SCL correspondent à l'objet affiché sur l'interface utilisateur associée à l'application, ladite détection comprenant l'exécution d'un traitement avant-arrière des couches de contenu spéciales de l'application lors d'un module de traitement SCL de l'application sur la base d'un contenu de texture d'une zone sur l'interface utilisateur proche de l'action d'utilisateur, dans lequel un manque de texture demande de ne pas effectuer le traitement avant-arrière et la présence de contenu de texture demande d'effectuer le traitement avant-arrière;
déterminer si une manipulation directe de l'objet par le biais de l'application est activée par au moins une SCL en réponse à l'occurrence; et
initier automatiquement la manipulation directe de l'objet à travers l'application si la manipulation directe de l'objet par le biais de l'application est activée par au moins une couche SCL.

2. Procédé selon la revendication 1, comprenant en outre les étapes suivantes:
désactiver la manipulation directe si la manipulation directe de l'objet par le biais de l'application n'est pas activée par ladite au moins une couche SCL.

3. Procédé selon la revendication 1, comprenant en outre les étapes suivantes:
en réponse à la détection de l'action de l'utilisateur par le biais de l'interface utilisateur associée à l'application, déterminer si l'application comprend au moins une couche SCL.

4. Procédé selon la revendication 1, dans lequel l'action de l'utilisateur comprend un ou plusieurs des éléments suivants: une entrée tactile, une entrée de geste, une entrée de souris, une entrée de stylet, une entrée de suivi de l'oeil, une entrée de commande vocale, une entrée gyroscopique et/ou saisie au clavier.

5. Dispositif informatique (400) pour effectuer un test d'occurrence, le dispositif informatique comprenant:
une mémoire (406) configurée pour stocker des instructions; et un processeur (404) couplé à la mémoire, le processeur exécutant une application (102) comprenant une pluralité de couches de contenu spéciales, SCL (104), dans lesquelles une couche SCL est une couche d'application où une décision immédiate concernant l'activation d'une manipulation directe d'un objet affiché sur une interface utilisateur associée à l'application peut être réalisé en réponse à une action de l'utilisateur, l'application provoquant la présentation de l'interface d'utilisateur associé à l'application, dans lequel l'application est configurée pour:
détecter l'action d'utilisateur par le biais de l'interface utilisateur associé à l'application:
en réponse à la détection d'une intersection de l'action utilisateur et d'un ou plusieurs pixels d'au moins l'une des couches SCL, identifier une occurrence, dans lequel le ou les pixels de ladite au moins une SCL correspondent à l'objet affiché sur l'interface utilisateur associée à l'application, ladite détection comprenant l'exécution d'un traitement avant-arrière des couches de contenu spéciales de l'application lors d'un module de traitement SCL de l'application sur la base d'un contenu de texture d'une zone sur l'interface utilisateur proche de l'action d'utilisateur, dans lequel un manque de texture demande de ne pas effectuer le traitement avant-arrière et la présence de contenu de texture demande d'effectuer le traitement avant-arrière;
déterminer si une manipulation directe de l'objet par le biais de l'application est activée par au moins une SCL en réponse à l'occurrence; et
initier automatiquement la manipulation directe de l'objet par le biais de l'application si ladite au moins une SCL permet la manipulation directe de l'objet par le biais de l'application.

6. Dispositif de calcul selon la revendication 5, dans lequel au moins une partie de l'objet est située dans une zone de l'interface utilisateur située à proximité de l'action de l'utilisateur.

7. Dispositif informatique selon la revendication 5, dans lequel un type de manipulation directe est déterminé sur la base d'un comportement de l'objet par rapport à l'action de l'utilisateur, et comprenant un panoramique, un zoom et une sélection.

8. Dispositif informatique selon la revendication 5, dans lequel un nombre des couches SCL dépend d'un type de l'application.

9. Dispositif informatique selon la revendication 5, dans lequel le dispositif informatique est un dispositif client et dans lequel l'interface utilisateur associée à l'application est présentée à un utilisateur par le biais d'un affichage du dispositif client lors de l'exécution de l'application sur le périphérique client.

10. Dispositif de mémoire lisible par ordinateur sur lequel sont stockées des instructions pour effectuer un test de réussite, les instructions comprenant les étapes suivantes :
détecter une action d'utilisateur à travers une interface utilisateur associée à une application (102) comprenant une pluralité de couches de contenu spéciales, SLC (104), dans pluralité de couches de contenu spéciales, SLC (104), dans pluralité de couches de contenu spéciales, SLC (104), dans lequel une couche SCL est une couche d'application où une décision immédiate concernant l'activation d'une manipulation directe d'un objet affiché sur l'interface utilisateur associée à l'application peut être adoptée en réponse à l'action de l'utilisateur;
en réponse à la détection d'une intersection de l'action utilisateur et d'un ou plusieurs pixels d'au moins l'une des couches SCL, identifier une occurrence,, dans lequel le ou les pixels de ladite au moins une SCL correspondent à l'objet affiché sur l'interface utilisateur associée à l'application, ladite détection comprenant l'exécution d'un traitement avant-arrière des couches de contenu spéciales de l'application lors d'un module de traitement SCL de l'application sur la base d'un contenu de texture d'une zone sur l'interface utilisateur proche de l'action d'utilisateur, dans lequel un manque de texture demande de ne pas effectuer le traitement avant-arrière et la présence de contenu de texture demande d'effectuer le traitement avant-arrière;
déterminer si une manipulation directe de l'objet par le biais de l'application est activée par au moins une SCL en réponse à l'occurrence; et
initier automatiquement la manipulation directe de l'objet à travers l'application si la manipulation directe de l'objet par le biais de l'application est activée par au moins une couche SCL,
ou bien
désactiver la manipulation directe si la manipulation directe de l'objet par le biais de l'application n'est pas activée par ladite au moins une couche SCL.

11. Dispositif de mémoire lisible par ordinateur selon la revendication 10, dans lequel les instructions comprennent en outre les étapes suivantes: définir, pour chaque SCL, un ou plusieurs types de manipulation directe.

12. Dispositif de mémoire lisible par ordinateur selon la revendication 11, dans lequel les instructions consistent en outre à:
définir, pour chaque type de manipulation directe, si la manipulation directe est activée ou désactivé par la couche SCL en réponse à l'occurrence.
